# EUROPEAN PATENT SPECIFICATION

(11) **EP 3 062 412 B1**
(45) Date of publication and mention of the grant of the patent: **20.11.2019**
(21) Application number: 13895861.6
(22) Date of filing: 22.10.2013
(51) Int. Cl.: G06F 1/3206, H02J 3/14, H02J 13/00, G06F 1/3234, H02J 3/00

(54) **CONTROL DEVICE, CONTROL METHOD, AND PROGRAM**
STEUERUNGSVORRICHTUNG, STEUERUNGSVERFAHREN UND PROGRAMM
DISPOSITIF DE COMMANDE, PROCÉDÉ DE COMMANDE, ET PROGRAMME

(43) Date of publication of application: 31.08.2016
(73) Proprietor: Mitsubishi Electric Corporation, Tokyo 100-8310 (JP)
(72) Inventor: NAKAMURA Shinji, Tokyo 100-8310 (JP)
(74) Representative: Pfenning, Meinig & Partner mbB
(86) International application number: PCT/JP2013/078609
(87) International publication number: WO 2015/059774

(56) References cited:
- WO-A1-2012/014731
- JP-A- 2008 259 402
- JP-A- 2012 191 717
- JP-A- 2013 031 283
- US-A1- 2003 188 210
- US-A1- 2006 294 400
- US-A1- 2009 119 523

## Description

### Technical Field

The present disclosure relates to a control device, a control method, and a program.

### Background Art

There is a method for suppressing power consumption of an electrical apparatus as one means for realizing a cost reduction through energy savings. A system for controlling electrical apparatuses is implemented in, for example, a building equipped with electrical apparatuses, in order to suppress power consumption of electrical apparatuses.

Such a system can, for example, be an energy-saving control system described in Patent Literature 1. This energy-saving control system obtains a present demand, which is an integrated value of instantaneous power up to the present time, and a change per unit time of the present demand. This energy-saving control system also predicts, from the present demand and the change per time unit of the present demand, an integrated value of the instantaneous power (power consumption amount) at an end of a predetermined time period (30 minutes).

This energy-saving control system, upon determining that a predicted integrated value has exceeded the integrated value (integrated value set by a user) obtained from a contract power with a power company, reduces the operation capacity of the electrical apparatuses. In this way, this energy-saving control system controls electrical apparatuses such that the actual integrated value at the end of a predetermined time period is less than or equal to the set integrated value.

US 2009/119523 A1 relates to managing power consumption based on historical average. In one embodiment of this document, an upper power limit and an average power limit are specified for each server of a computer system. Power to each server is controlled so that the instantaneous power consumption does not exceed the upper power limit and the average power consumption does not exceed the average power limit. Servers whose average power consumption is currently less than the average power limit are identified. The instantaneous power consumption of each identified server is temporarily allowed to exceed its average power limit, to maximize server throughput. In cases where the average power limit of a device is reduced, such as may occur during peak energy pricing hours, the instantaneous power consumption of the device may be throttled down below the average power limit until the average power consumption no longer exceeds the average power limit.

### Citation List

### Patent Literature

Patent Literature 1: Unexamined Japanese Patent Application Kokai Publication No. 2009-115392.

### Summary of Invention

### Technical Problem

The energy-saving control system disclosed in Patent Literature 1, as previously described, predicts, from a present demand (an integrated value of instantaneous power up to the present time) and a change per time unit of the present demand, an integrated value of instantaneous power at an end of a predetermined time period (30 minutes).

As such, for example, when the present demand during an early stage in a predetermined time period is relatively small, this energy-saving control system determines that a predicted integrated value at the end of a time period is less than or equal to the set integrated value. This energy-saving control system accordingly, for example, conducts control causing the operation capacity of the electrical apparatuses to increase (conducts control causing power consumption of the electrical apparatuses to increase).

However, for example, when the present demand during an early stage in a predetermined time period is relatively large, this energy-saving control system determines that a predicted integrated value at the end of a time period exceeds a set integrated value. This energy-saving control system accordingly, for example, conducts control causing the operation capacity of the electrical apparatuses to decrease as the end of a time period draws closer, so that the actual integrated value at the end of the time period is less than or equal to the set integrated value (conducts control causing power consumption of electrical apparatuses to decrease). In particular, this energy-saving control system conducts control causing power consumption of the electrical apparatuses to drastically decrease as the end of a time period draws closer, the bigger the present demand is in an early stage in the time period.

In this manner, this energy-saving control system has a drawback in that a user of an electrical apparatus may be inconvenienced due insufficient leveling of power consumption of electrical apparatuses because of the energy-saving control system conducting control causing, for example, the power consumption of an electrical apparatus to drastically decrease.

The present disclosure is made by taking the actual situation mentioned above into consideration, and an object of the present disclosure is to provide a control device, a control method, and a program that reduces inconvenience caused by fluctuation in operation capacity of an electrical apparatus and contributes to reducing energy consumption.

### Solution to Problem

The object of the present disclosure is solved by the independent claims. Advantageous embodiments are described by the dependent claims.

To achieve the foregoing objective, a first control device according to this disclosure controls an electrical apparatus so that a power consumption of the electrical apparatus during a predetermined specified time period is less than or equal to a predetermined set power. A spare power acquirer, each time a set time period shorter than the specified time period elapses, obtains an average power consumption of the electrical apparatus in the set time period and a spare power of the average power consumption with respect to a target power in the set time period that is based on the set power. An updater, when the spare power obtained by the spare power acquirer is a positive value, updates the target power in a next set time period to a power that is obtained by adding the spare power to the set power, and when the spare power obtained by the spare power acquirer is a negative value, updates the target power in the next set time period to a power that is obtained by subtracting an absolute value of the spare power from the set power, and reports the updated target power to a controller that controls the electrical apparatus.

Also, to achieve the forgoing objective, a second control device outside of the invention according to this disclosure controls an electrical apparatus so that a power consumption of the electrical apparatus during a predetermined specified time period is less than or equal to a predetermined set power. A surplus power acquirer, each time a set time period shorter than a specified time period elapses, obtains a generated power in the set time period generated by a power-generating device that causes power to be generated, and a surplus power based on the generated power. An updater, when the surplus power obtained by the surplus power acquirer is a positive value, updates the target power based on the set power in a next set time period to a power that is obtained by adding the obtained spare power to the set power, and when the surplus power obtained by the surplus power acquirer is zero, updates the target power in the next set time period to the set power, and reports the updated target power to a controller that controls the electrical apparatus.

### Advantageous Effects of Invention

According to the first control device of the present disclosure, the updater updates the target power in the next set time period to a power that is obtained by adding the spare power to the set power when the spare power obtained by the spare power acquirer is a positive value. Conversely, the updater, when the spare power obtained by the spare power acquirer is a negative value, updates the target power in the next set time period to a power obtained by subtracting an absolute value of the obtained spare power from the set power. The updater then reports the updated target power to a controller that controls the electrical apparatus. As such, the control device does not conduct control causing, for example, the power consumption of the electrical apparatus to drastically decrease as the end of the specified time period draws closer resulting in insufficient leveling of the power consumption of the electrical apparatus. Thus, the first control device reduces inconvenience caused by fluctuation in operation capacity of the electrical apparatus and contributes to reducing energy consumption.

According to the second control device outside of the invention of the present disclosure, the updater, when the surplus power obtained by the surplus power acquirer is a positive value, updates the target power based on the set power in the next set time period to a power obtained by adding the obtained surplus power to the set power. Conversely, the updater, when the surplus power obtained by the surplus power acquirer is zero, updates the target power in the next set time period to the set power. The updater then reports the updated target power to a controller that controls the electrical apparatus. As such, even if the control device causes the target power to increase, the target power does not get reduced to lower than the set power. Accordingly, the control device does not conduct control causing, for example, power consumption of the electrical apparatus to drastically decrease as the end of the specified time period draws closer resulting in insufficient leveling of the power consumption of the electrical apparatus. Thus, the second control device reduces inconvenience caused by fluctuation in operation capacity of the electrical apparatus and contributes to reducing energy consumption.

### Brief Description of Drawings

FIG. 1 is a block diagram of a control system according to Embodiment 1 of the present disclosure;
FIG. 2A is a diagram illustrating an average power consumption for an air conditioner of the control system according to Embodiment 1;
FIG. 2B is a diagram illustrating an updating of a demand value of the control system according to Embodiment 1;
FIG. 3 is a diagram illustrating a demand control by a control device of the control system according to Embodiment 1;
FIG. 4 is a flowchart showing a demand value update process of the control system according to Embodiment 1;
FIG. 5 is a block diagram of a control system according to Embodiment 2 of the present disclosure;
FIG. 6A is a diagram illustrating a surplus power of the control system according to Embodiment 2;
FIG. 6B is a diagram illustrating an updating of a demand value of the control system according to Embodiment 2;
FIG. 7 is a flowchart showing a demand value update process of the control system according to Embodiment 2;
FIG. 8 is a block diagram of a control system according to Embodiment 3 of the present disclosure;
FIG. 9A is a diagram illustrating a spare power of the control system according to Embodiment 3;
FIG. 9B is a diagram illustrating a surplus power of the control system according to Embodiment 3;
FIG. 9C is a diagram illustrating an updating of a demand value of the control system according to Embodiment 3; and
FIG. 10 is a flowchart showing a demand value update process of the control system according to Embodiment 3.

### Description of Embodiments

### Embodiment 1

An air-conditioning system 10 including a control system according to Embodiment 1 of the present disclosure is described in detail below with reference to the drawings as an example of an air-conditioning system that controls indoor temperature.

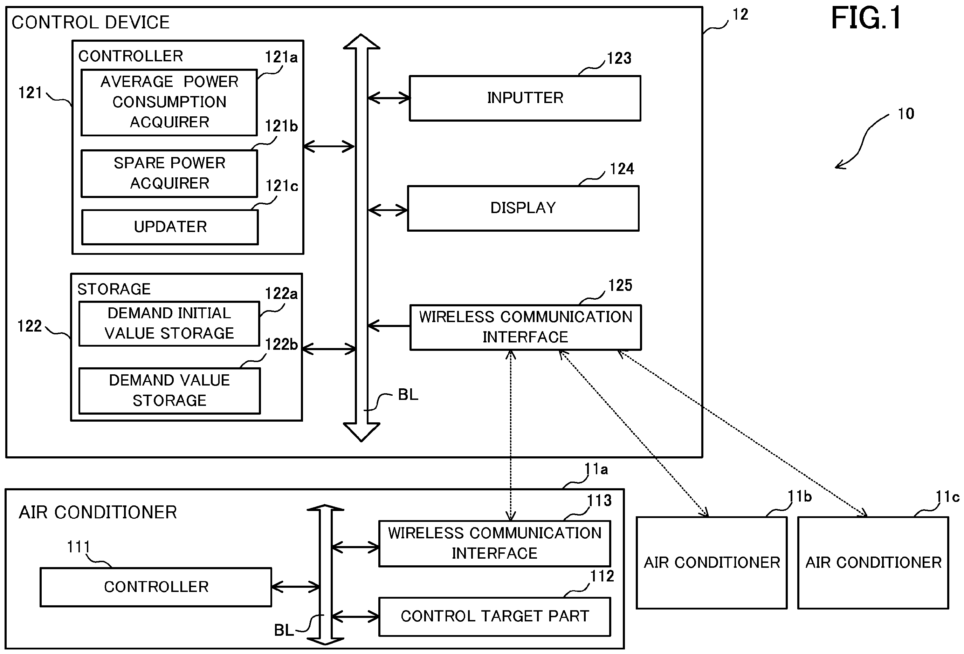

The air-conditioning system 10 includes multiple air conditioners 11 as an example of electrical apparatuses, as illustrated in FIG. 1. The air-conditioning system 10, for example, further includes a control device 12 that controls the air conditioners 11a to 11c so that an average power consumption that is obtained based on an average value of a power consumption during a predetermined specified time period which is supplied from commercial power source to the air conditioners 11a to 11c and consumed is less than or equal to a predetermined set power. The control by this control device 12 is referred to as demand control.

The specified time period refers to a time period during which the control device 12 conducts demand control. Hereinafter, the specified time period is referred to as a demand time period. Also, the set power refers to an upper limit value of a power consumption allowed to be consumed by the air conditioners 11a to 11c during the demand time period. Hereinafter, the set power is referred to as a demand initial value D.

The air conditioners 11a to 11c each include a controller 111 that conducts overall control of the air conditioner 11, a control target part 112 to be controlled by the controller 111, and a wireless communication interface 113 that enables wireless communication. Each of the components 1 1 1 to 113 are connected to each other via a bus line BL.

The controller 111 includes a central processing unit (CPU), a read only memory (ROM), a random access memory (RAM), and a timer.

The controller 111 starts counting with the timer upon reception, from the control device 12, of a signal indicating that demand control has started while the power source of the air conditioner 11 is turned on. When the controller 111 determines, based on counting with the timer, that a set time period (3 minutes for example), which is a shorter time period than the demand time period (30 minutes for example), has elapsed, the controller 111 obtains a power consumption amount in the set time period. The controller 111 then transmits the power consumption amount in the set time period to the control device 12. In this way, the controller 111 transmits the power consumption amount in the set time period to the control device 12 each time the set time period elapses.

In this embodiment, the controller 111 of each air conditioner 11a to 11c transmits to the control device 12 the power consumption amount together with a piece of identification information that can specify the air conditioner 11.

The control target part 112 is, for example, a heat exchanger, an inverter circuit, and the like.

The wireless communication interface 113 transmits to the control device 12 a power consumption amount together with a piece of identification information.

Control device 12 includes a controller 121 that conducts overall control of the control device 12, and a storage 122 that stores information that the controller 121 references. The control device 12 further includes: an inputter 123 for accepting a user input of the demand initial value D which is an initial value of a demand value described later and for accepting a demand control start instruction from the user; a display 124 for displaying the input demand initial value D; and a wireless communication interface 125 that enables wireless communication. Each of the components 121 to 125 are interconnected via a bus line BL. The demand value is a target power of the air conditioners 11a to 11 c in a set time period based on the demand initial value D and is updated each time the set time period elapses.

The demand initial value D is input for each air conditioners 11a to 11c by, for example, a user. For example, the user inputs the demand initial value D together with a piece of identification information that can specify air conditioners 11a to 11c.

The controller 121 includes a CPU, a ROM, and a RAM. When the inputter 123 accepts an instruction to start the demand control, the controller 121 transmits to the air conditioners 11a to 11c, a signal indicating that the demand control has started. Also, upon reception of the power consumption amount which is transmitted from the air conditioners 11a to 11c, the controller 121 stores the power consumption amount together with the piece of identification information into the RAM.

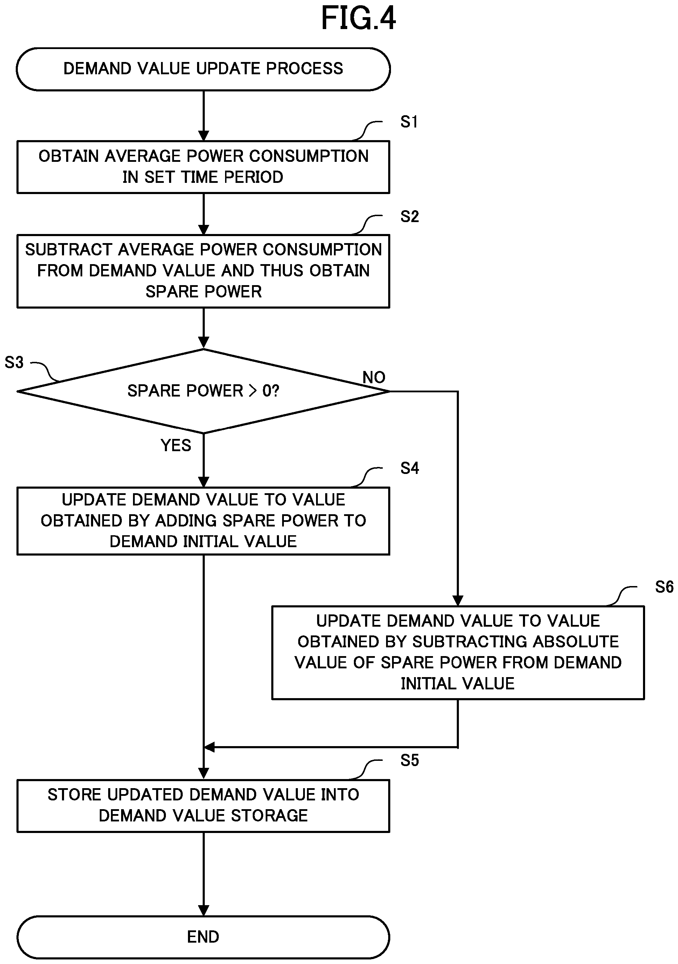

By executing a program (for example, a program that realizes the flowchart in FIG. 4 described later) stored in the ROM, the CPU of the controller 121 realizes: an average power consumption acquirer 121a that obtains an average power consumption of the air conditioners 11a to 11c in the set time period; the spare power acquirer 121b that obtains a spare power of the average power consumption obtained by the average power consumption acquirer 121a with respect to the demand value (target power); and the updater 121c that updates the demand value.

The average power consumption acquirer 121a acquires from the RAM a power consumption amount which is transmitted from the air conditioners 11a to 11c for each piece of identification information (for each air conditioner 11). The average power consumption acquirer 121a then divides the acquired power consumption amount by the set time period and obtains the average power consumption of the air conditioner 11 in the set time period for each piece of identification information.

Each time the average power consumption is obtained by the average power consumption acquirer 121a (each time the set time period elapses), the spare power acquirer 121b subtracts the obtained average power consumption from the present demand value, and thus obtains the spare power for each piece of identification information.

When the spare power obtained by the spare power acquirer 121 b is a positive value, the updater 121c adds the obtained spare power to the demand initial value D, and thus updates the demand value in the next set time period for each piece of identification information.

Conversely, when the spare power obtained by the spare power acquirer 121b is not a positive value (is zero or negative value), the updater 121c subtracts an absolute value of the obtained spare power from the demand initial value D, and thus updates the demand value in the next set time period for each piece of identification information.

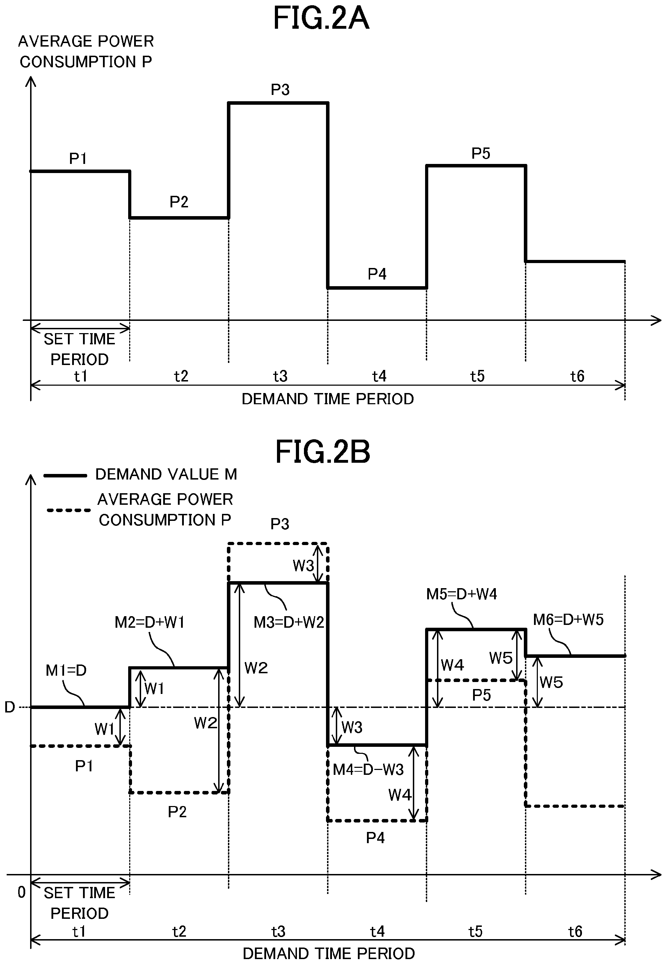

The updating of the demand value is described in detail with reference to FIGS. 2A and 2B. In the description of FIGS. 2A and 2B,a demand time period T is divided into six equal segments defined as set time periods t1 to t6. The set time periods t1 to t6 each have the same length.

For example, as illustrated in FIG. 2A, the average power consumption acquirer 121a obtains, as P1 (= average power consumption in the set time period t1), an average power consumption of the air conditioner 11a in the set time period t1 from the power consumption amount which is transmitted from the air conditioner 11a. Then, the spare power acquirer 121b subtracts the obtained average power consumption P1 from a demand value (a demand value of the set time period t1 is the demand initial value D) that is together with the piece of identification information indicating the air conditioner 11a, and thus obtains a spare power W1 (positive value) of the air conditioner 11a.

The updater 121c adds the obtained spare power W1 to the demand initial value D, and thus updates a demand value M2 of the air conditioner 11a in the next set time period t2 following the set time period t1 to the demand initial value D + the spare power W1, as illustrated in FIG. 2B.

The average power consumption acquirer 121a also, for example, obtains, as P3, an average power consumption of the air conditioner 11a in the set time period t3 from the power consumption amount which is transmitted from the air conditioner 11a, as illustrated in FIG. 2A. Then, the spare power acquirer 121b subtracts the obtained average power consumption P3 from a demand value M3 of the air conditioner 11a in the set time period t3, and thus obtains a negative value of a spare power W3.

Then, the updater 121c subtracts an absolute value of the spare power W3 from the demand initial value D, and thus updates a demand value M4 of the air conditioner 11a in the next set time period t4 following the set time period t3 to the demand initial value D - the absolute value of the spare power W3 as illustrated in FIG. 2B.

Also, the average power consumption acquirer 121a obtains, as P5, an average power consumption of the air conditioner 1 la in the set time period t5 from the power consumption amount which is transmitted by the air conditioner 11a, as illustrated in FIG. 2A. Then, the spare power acquirer 121b subtracts the obtained average power consumption P5 from a demand value M5 of the air conditioner 11a in the set time period t5 and obtains a positive spare power W5.

The updater 121c adds the obtained spare power W5 to the demand initial value D, and thus updates a demand value M6 of the air conditioner 11a in the next set time period t6 following the set time period t5 to the demand initial value D + the spare power W5, as illustrated in FIG. 2B.

By performing the above-described process also for the air conditioners 11b and 11c, the controller 121 updates the demand value each time the set time period elapses during the demand time period. Upon updating the demand value, the controller 121 obtains a rated power capacity ratio of the air conditioner 11 based on the updated demand value. The controller 121 then transmits to the air conditioner 11a control signal indicating the rated power capacity ratio.

Upon reception of the control signal, the controller 111 of the air conditioner 11 operates with the rated power capacity ratio instructed by the control signal, set as a target (standard).

In this way, the control device 12 controls the air conditioner 11 so that the average power consumption in the demand time period which is supplied to the air conditioner 11 from, for example, a commercial power source, and consumed, is less than or equal to the demand initial value D.

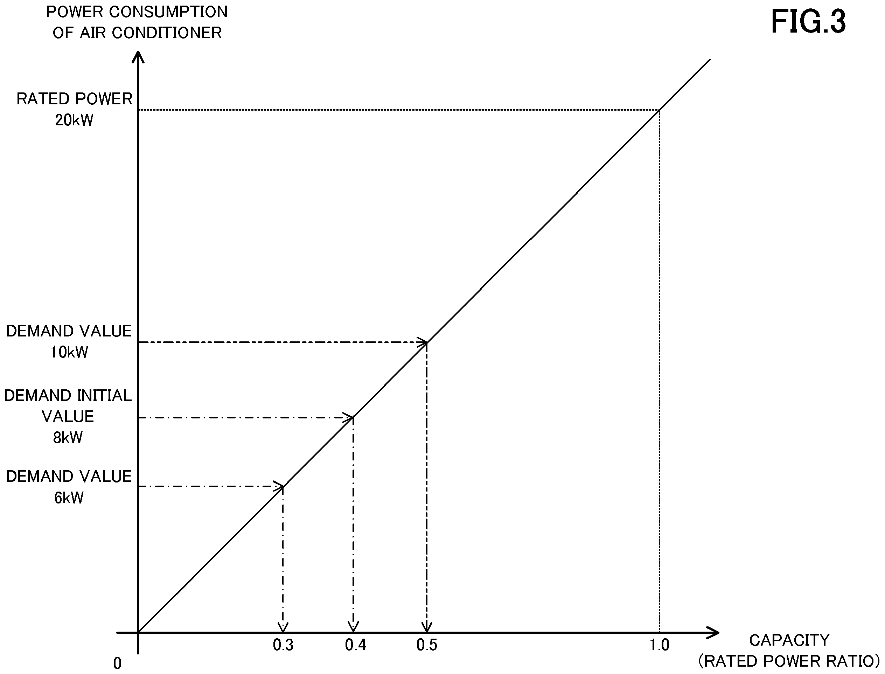

For example, as illustrated in FIG. 3, the rated power of the air conditioner 11 is 20 kW, the demand initial value D is 8 kW, and the updated demand value is 10 kW as a result of a positive value of the obtained spare power. Then, the controller 121 obtains a rated power capacity ratio of 0.5 so that the power consumption of the air conditioner 11 is 10 kW. The controller 121 then transmits (reports) to the air conditioner 11a control signal indicating that the rated power capacity ratio is 0.5.

Upon reception of the control signal, the controller 111 of the air conditioner 11 operates with the rated power capacity ratio of 0.5 instructed by the control signal, set as the target.

Subsequently, as the set time period elapses again, the controller 121 determines that the updated demand value is 6 kW as a result of a negative value of the obtained spare power. Then, the controller 121 obtains a rated power capacity ratio of 0.3 so that the power consumption of the air conditioner 11 is 6 kW. The controller 121 then transmits (reports) to the air conditioner 11a control signal indicating the rated power capacity ratio of 0.3.

Upon reception of the control signal, the controller 111 of the air conditioner 11 operates with the rated power capacity ratio of 0.3 instructed by the control signal, set as the target.

Referring back to the description of FIG. 1. The storage 122 includes a flash memory for example. The storage 122 includes a demand initial value storage 122a that stores a demand initial value D, and a demand value storage 122b that stores a present demand value.

When the demand initial value D and a piece of identification information are input by a user operation through the inputter 123, the controller 121 stores the input demand initial value D together with the piece of identification information into the demand initial value storage 122a.

The demand value stored into the demand value storage 122b is the same value as the demand initial value D until the demand control by the control device 12 starts. As such, when the demand initial value D is input by the user operation through the inputter 123, the controller 121 also stores the input demand initial value D into the demand value storage 122b.

When the control device 12 starts the demand control, the controller 121 updates the demand value each time the set time period elapses. The controller 121 stores the updated demand value together with the piece of identification information into the demand value storage 122b. The controller 121 obtains the rated power capacity ratio of the air conditioner 11 based on the demand value stored in the demand value storage 122b.

The inputter 123 is a keyboard for example. The display 124 is a liquid crystal display for example.

The wireless communication interface 125 receives a power consumption amount which is transmitted from the air conditioner 11. Also, the wireless communication interface 125 transmits a control signal to the air conditioner 11.

The controller 121 of the control device 12 obtains the rated power capacity ratio of the air conditioner 11 based on the demand initial value D stored in the demand value storage 122b when starting of the demand control by the control device 12 is instructed from a user while the power sources of the above-described air conditioner 11 and control device 12 are turned on. The controller 121 then transmits to the air conditioner 11a control signal indicating the rated power capacity ratio.

Upon reception of the control signal, each controller 111 of the air conditioners 11a to 11c operates with the rated power capacity ratio instructed by the control signal, set as the target. Each controller 111 of the air conditioners 11a to 11c then transmits a power consumption amount in the set time period to the control device 12 as the set time period elapses.

Upon reception of the power consumption amount in the set time period from each of the air conditioners 11a to 11c, the control device 12 executes a demand value update process as illustrated in FIG. 4 in response to an interrupt signal indicating that the power consumption amount was received. The demand value update process is a timer-interrupt process.

In the demand value update process, the controller 121 (the average power consumption acquirer 121a) acquires from the RAM a power consumption amount in the set time period which is transmitted from the air conditioner 11, divides the power consumption amount by the set time period, and then obtains an average power consumption of the air conditioner 11 in the set time period for each piece of identification information (for each air conditioner 11) (step S1).

Next, the controller 121 (the spare power acquirer 121b) subtracts the average power consumption obtained in step S1 from the demand value stored in the demand value storage 122b, and thus obtains a spare power for each piece of identification information (step S2). When the demand value stored in the demand value storage 122b is not yet updated, the demand value is the demand initial value D.

For example, as illustrated in FIGS. 2A and 2B, when the average power consumption of the air conditioner 11a, which is obtained in step S1 in the set time period t1, is P1, and the demand value, which is stored in demand value storage 122b, is the demand initial value D, the controller 121 (the spare power acquirer 121b) obtains the spare power of the air conditioner 11a as a positive value W1 (= D - P1).

Also, for example, as illustrated in FIGS. 2A and 2B, when the average power consumption of the air conditioner 11a, which is obtained in step S1 in the set time period t3, is P3, and the demand value, which is stored in the demand value storage 122b, is M3, the controller 121 (the spare power acquirer 121b) obtains a negative spare power (= M3 - P3).

After step S2, illustrated in FIG. 4, the controller 121 (the updater 121c) determines whether the spare power is greater than zero (positive or negative) for each piece of identification information (step S3).

When the spare power is equal to or less than zero, that is to say, when the spare power is zero or a negative value, this is indication that the average power consumption of the air conditioner 11 is greater than or equal to the present demand value. In this case, the controller 121 (the updater 121c) determines No in step S3 for the piece of identification information that is together with the spare power indicating zero or a negative value. The controller 121 (the updater 121c) then updates the demand value to a value obtained by subtracting an absolute value (including zero) of the spare power from the demand initial value D which is stored in the demand initial value storage 122a (step S6).

For example, as illustrated in FIG. 2B, in the set time period t3, when the spare power of the air conditioner 11a obtained in step S2 is the negative value W3,the controller 121 subtracts an absolute value of the spare power W3 from the demand initial value D, and then updates the demand value M4 of the air conditioner 11a in the set time period t4 to D - W3.

After step S3 illustrated in FIG. 4, the controller 121 (the updater 121c) stores the updated demand value into the demand value storage 122b (step S5) and thereby completes the demand value update process.

Conversely, when the value of the spare power is greater than zero, the average power consumption of the air conditioner 11 is less than the present demand value, and this is indication that there is a spare power. In this case, the controller 121 (the updater 121c) determines Yes in step S3 for the piece of identification information that is together with the spare power that exceeds zero. The controller 121 (the updater 121c) then updates the demand value to a value obtained by adding the spare power obtained in step S2 to the demand initial value D which is stored in the demand initial value storage 122a (step S4).

For example, as illustrated in FIG. 2B, when the spare power of the air conditioner 11a obtained in step S2 is the positive value W1 in the set time period t1, the controller 121 adds the spare power W1 to the demand initial value D, and then increases the demand value M2 of the air conditioner 11a in the set time period t2 to D + W1.

After step S4 illustrated in FIG. 4, the controller 121 (the updater 121c) stores the updated demand value into the demand value storage 122b for each piece of identification information (step S5) and thereby completes the demand value update process.

The controller 121 then obtains a rated power capacity ratio of the air conditioner 11 based on the demand value (the updated demand value) stored in the demand value storage 122b. The controller 121 then transmits to the air conditioner 11 a control signal indicating the rated power capacity ratio.

Upon reception of the control signal, the controller 111 of the air conditioner 11 operates with the rated power capacity ratio instructed by the control signal, set as the target.

As described above, when a spare power is generated, the control device 12 adds the spare power to the demand initial value D, and then updates the demand value in the next set time period. Conversely, when the spare power is negative, the control device 12 subtracts an absolute value of the negative spare power from the demand initial value D, and then updates the demand value in the next set time period.

As such, the control device 12 does not conduct control causing, for example, the power consumption of the air conditioner 11 to drastically decrease as the end of the specified time period draws closer resulting in insufficient leveling of the power consumption of the air conditioner 11. Thus, the air-conditioning system 10 of Embodiment 1 reduces inconvenience caused by fluctuation in operation capacity of the air conditioner 11 and contributes to reducing energy consumption.

### Embodiment 2

As previously described, in Embodiment 1, the demand value is increased based on the actual power consumption in the previous set time period.

However, this disclosure is not limited to this example and when a suppliable power fluctuates, the demand value may be increased based on the actual power supply on the power-supplying side instead of the actual power consumption on the power-consuming side.

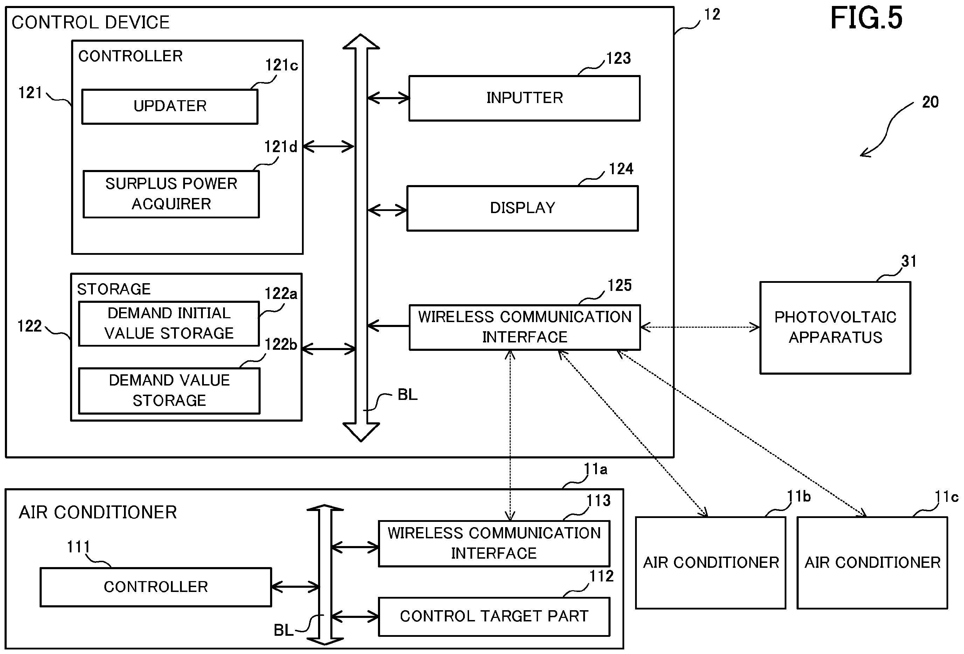

An air-conditioning system 20 of Embodiment 2, illustrated in FIGS. 5 to 7, obtains a surplus power based on a generated power in the set time period of a photovoltaic apparatus, adds the surplus power to the demand initial value D, and then increases the demand value in the set time period.

Hereafter, the air-conditioning system 20 of Embodiment 2 is described with reference to FIGS. 5 to 7. The components described here that are the same as those in the air-conditioning system 10 of Embodiment 1 are given the same reference numbers.

The air-conditioning system 20 that includes a control system set forth in Embodiment 2 of the present disclosure, as illustrated in FIG. 5, includes, in addition to the air conditioners 11 and the control device 12, a photovoltaic apparatus 31 that generates power by converting sunlight energy into electricity.

The photovoltaic apparatus 31 starts counting with a timer upon reception, from the control device 12, of a signal indicating that demand control has started while the power source of the air conditioner 11 is turned on. When the photovoltaic apparatus 31 determines, based on counting with the timer, that a set time period (3 minutes for example), which is a shorter time period than a demand time period (30 minutes for example), has elapsed, the photovoltaic apparatus 31 obtains a generated power amount in the set time period. The photovoltaic apparatus 31 then transmits the generated power amount in the set time period to the control device 12. In this way, the photovoltaic apparatus 31 transmits the generated power amount in the set time period to the control device 12 each time the set time period elapses.

Upon reception of the generated power amount which is transmitted from the photovoltaic apparatus 31, the controller 121 of the control device 12 stores the generated power amount into the RAM.

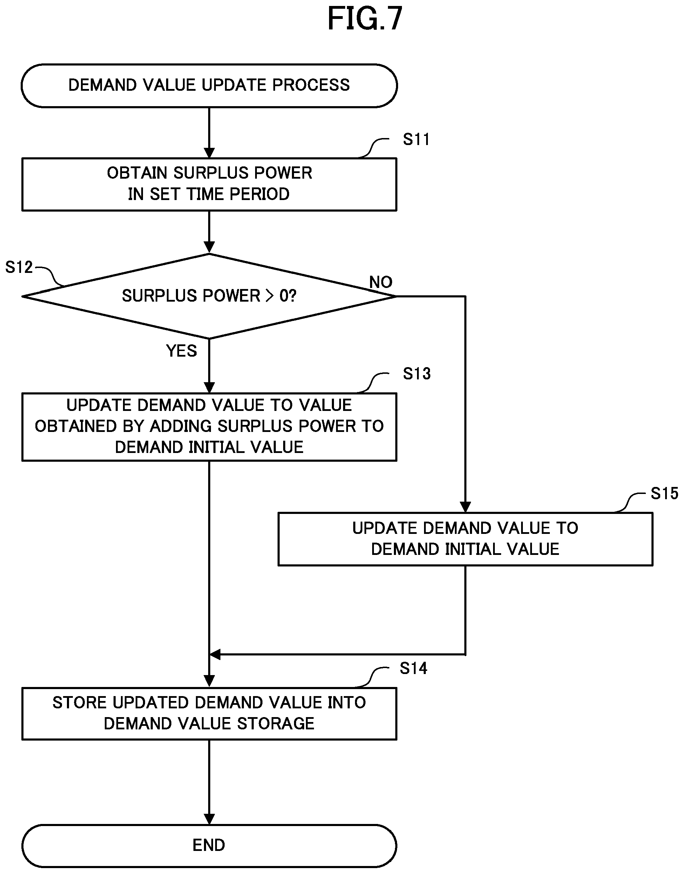

The CPU of the controller 121 executes a program (for example, a program that realizes the flowchart in FIG. 7 described later) stored in the ROM. Accordingly, the CPU of the controller 121 realizes: an updater 121c that updates the demand value; and a surplus power acquirer 121d that obtains the surplus power based on the generated power by the photovoltaic apparatus 31 in the set time period.

The surplus power acquirer 121d acquires from the RAM the generated power amount which is transmitted from the photovoltaic apparatus 31 and divides the generated power amount by the set time period. The surplus power acquirer 121d then obtains the generated power by the photovoltaic apparatus 31 in the set time period.

The surplus power acquirer 121d divides the obtained generated power by the number of units of the air conditioner 11 (distributes the surplus power among each of the air conditioners 11), and thus obtains the surplus power. The surplus power acquirer 121d then multiplies the obtained surplus power by a predetermined coefficient, and thus obtains the surplus power in the set time period. The coefficient in this embodiment is 1.0.

When the surplus power obtained by the surplus power acquirer 121d is a positive value, the updater 121c adds the surplus power to the demand initial value D that is together with each piece of identification information, and thus updates the demand value for each piece of identification information each time the set time period elapses.

Conversely, when the surplus power obtained by the surplus power acquirer 121d is zero, the updater 121c sets the demand initial value D as the demand value that is together with each piece of identification information.

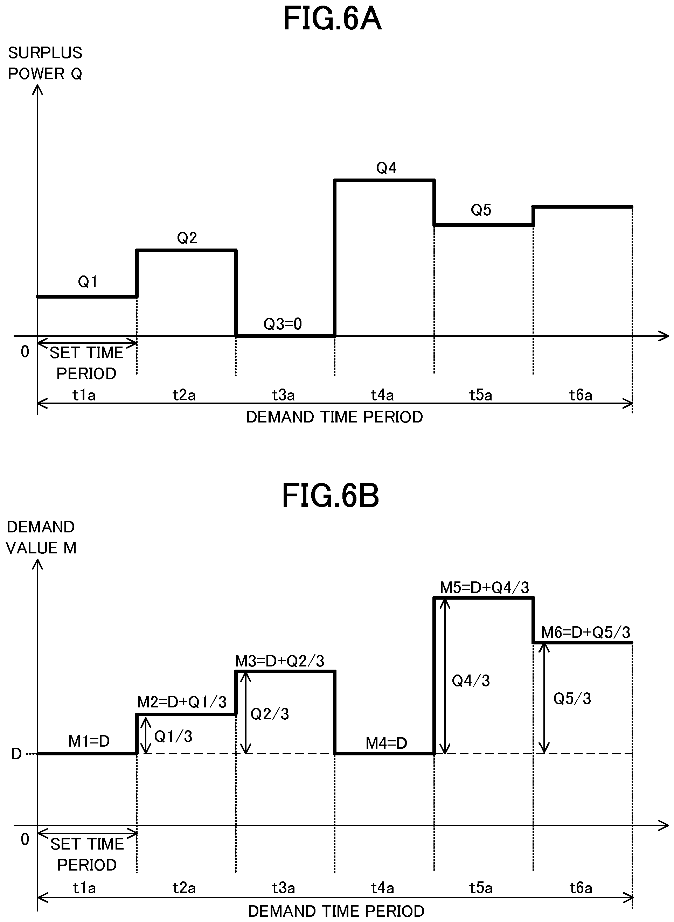

The updating of the demand value is described in detail with reference to FIGS. 6A and 6B. In the description of FIGS. 6A and 6B, the demand time period T is divided into six equal segments defined as set time periods t1a to t6a. The set time periods t1a to t6a each have the same length.

For example, as illustrated in FIG. 6A, the surplus power acquirer 121d obtains, as Q1, a generated power in the set time period t1a from the generated power amount which is transmitted from the photovoltaic apparatus 31. The surplus power acquirer 121d then divides the generatd power Q1 by three, which is the number of units of the air conditioner 11, and thus obtains a surplus power Q1/3. Then, the updater 121c adds the surplus power Q1/3 to the demand initial value D of the air conditioner 11a, and thus increases the demand value M2 of the air conditioner 11a in the next set time period t2a following the set time period t1a to D + Q1/3, as illustrated in FIG. 6B.

Also, for example, as illustrated in FIG. 6A, the surplus power acquirer 121d obtains, as zero, a surplus power Q3 in the set time period t3a from the generated power amount which is transmitted from the photovoltaic apparatus 31. Then, the updater 121c sets the demand value M4 of the air conditioner 11a in the next set time period t4a following the set time period t3a to the demand initial value D, as illustrated in FIG. 6B.

Also, for example, as illustrated in FIG. 6A, the surplus power acquirer 121d obtains, as Q5, a generated power in the set time period t5a from the power-generation amount which is transmitted from the photovoltaic apparatus 31. The surplus power acquirer 121d then divides the obtained generated power Q5 by three, which is the number of units of the air conditioner 11, and thus obtains a surplus power Q5/3. Then, the updater 121c adds the surplus power Q5/3 to the demand initial value D of the air conditioner 11a, and thus increases the demand value M6 of the air conditioner 11a in the next set time period t6a following the set time period t5a to D + Q5/3, as illustrated in FIG. 6B.

By performing this process also for the air conditioners 11b and 11c, the controller 121 updates the demand value during the demand time period. Upon updating of the demand value, the controller 121 obtains an upper limit value for the rated power capacity ratio of the air conditioner 11 based on the updated demand value. Then, the controller 121 transmits (reports) a control signal indicating the upper limit value for the rated power capacity ratio to the air conditioner 11.

Upon reception of the control signal, the controller 111 of the air conditioner 11 operates with the rated power capacity ratio value instructed by the control signal, set as the upper limit.

In this manner, the control device 12 sets the demand initial value D as the lower limit. The control device 12, when there is a surplus power, increases the demand value in the next set time period, and when there is no surplus power, sets the demand initial value D as the demand value of the next set time period. In this way, the control device 12 controls the air conditioner 11 so that the average power consumption in the demand time period which is supplied to the air conditioner 11 from, for example, a commercial power source, and consumed, is less than or equal to the demand initial value D.

The controller 121 of the control device 12 obtains the upper limit value for the rated power capacity ratio of the air conditioner 11 based on the demand initial value D stored in the demand value storage 122b when starting of the demand control by the control device 12 is instructed from a user while the power sources of the above-described air conditioner 11 and control device 12 are turned on, and the photovoltaic apparatus 31 is in a power-generation-capable state. The controller 121 then transmits a control signal indicating the upper limit value for the rated power capacity ratio to the air conditioner 11.

Upon reception of the control signal, each controller 111 of the air conditioners 11a to 11c operates with the upper limit value for the rated power capacity ratio instructed by the control signal, set as the upper limit.

Also, the photovoltaic apparatus 31 transmits the generated power amount in the set time period to the control device 12 as the set time period elapses.

Upon reception of the generated power amount in the set time period from the photovoltaic apparatus 31, the control device 12 executes a demand value update process illustrated in FIG. 7 in response to an interrupt signal indicating that the generated power amount was received. The demand value update process is a timer-interrupt process.

In the demand value update process, the controller 121 (the surplus power acquirer 121d) acquires from the RAM a generated power amount which is transmitted from the photovoltaic apparatus 31, divides the generated power amount by the set time period, and then obtains a generated power of the photovoltaic apparatus 31 in the set time period (step S11). Then, the controller 121 (the surplus power acquirer 121d) obtains a value distributed among each of air conditioner 11 from the obtained generated power, multiplies the value by the predetermined coefficient (1.0), and then obtains a surplus power in the set time period (step S11).

The controller 121 (the updater 121c) then determines whether the obtained surplus power exceeds zero (whether a positive value or not) (step S12).

When the surplus power exceeds zero, this is indication that there is a surplus power. In this case, the controller 121 (the updater 121c) determines Yes in step S12. The controller 121 (the updater 121c) adds the obtained surplus power to the demand initial value D for each piece of identification information stored in the demand initial value storage 122a and thus increases each demand value in the next set time period (step S13).

In step S13, for example, as illustrated in FIGS. 6A and 6B, when the obtained generated power in the set time period t1a is Q1 and the demand initial value of the air conditioner 11a which is stored in the demand initial value storage 122a is D, the controller 121 (the updater 121c) adds the surplus power Q1/3 to the demand initial value D, and then increases the demand value M2 in the next set time period t2a of the air conditioner 11a to D + Q1/3.

After step S13, the controller 121 (the updater 121c) stores the updated demand value into the demand value storage 122b (step S14) and thereby completes the demand value update process.

Conversely, when the surplus power does not exceed zero, that is to say, when the surplus power is zero, this is indication that there is no surplus power. In this case, the controller 121 (the updater 121c) determines No in step S12. The controller 121 (the updater 121c) then updates the demand value for each piece of identification information (each demand value in the next set time period) to the demand initial value (step S15).

The controller 121 (the updater 121c) then stores the updated demand value into the demand value storage 122b (step S14) and thereby completes the demand value update process.

The controller 121 then obtains an upper limit value of the rated power capacity ratio of the air conditioner 11 based on the demand value (the updated demand value) which is stored in the demand value storage 122b. The controller 121 then transmits a control signal indicating the upper limit value of the rated power capacity ratio to the air conditioner 11.

Upon reception of the control signal, the controller 111 of the air conditioner 11 operates with the upper limit value for the rated power capacity ratio instructed by the control signal, set as the upper limit.

As described above, when the photovoltaic apparatus 31 is generating power, the control device 12 adds the distributed surplus power to the demand initial value D, and then increases the demand value in the next set time period. Conversely, when the photovoltaic apparatus 31 is not generating power, the control device 12 sets the demand initial value D as the demand value in the next set time period.

As such, during the demand time period, although the control device 12 conducts control causing the demand value to increase, the control device 12 does not conduct control causing the demand value to decrease to a value lower than the demand initial value D. Accordingly, the control device 12 does not conduct control causing, for example, the power consumption of the air conditioner 11 to drastically decrease as the end of the specified time period draws closer resulting in insufficient leveling of the power consumption of the air conditioner 11. Thus, the air-conditioning system 20 of Embodiment 2 reduces inconvenience caused by fluctuation in operation capacity of the air conditioner 11 and contributes to reducing energy consumption.

### Embodiment 3

As previously described, in the air-conditioning system 10 of Embodiment 1 the average power consumption of the air conditioners 11 in the set time period is subtracted from the present demand value to obtain the spare power, and when there is a spare power, the spare power is added to the demand initial value D and then the demand value is increased. Also, in the air-conditioning system 20 of Embodiment 2, when the photovoltaic apparatus 31 is generating power, the surplus power distributed from the generated power is obtained, the obtained surplus power is added to the demand initial value D, and then the demand value is increased.

However, this disclosure is not limited to these examples, and when a suppliable power fluctuates, the demand value may be updated based on the actual power supply on the power-supplying side and actual power consumption on the power-consuming side.

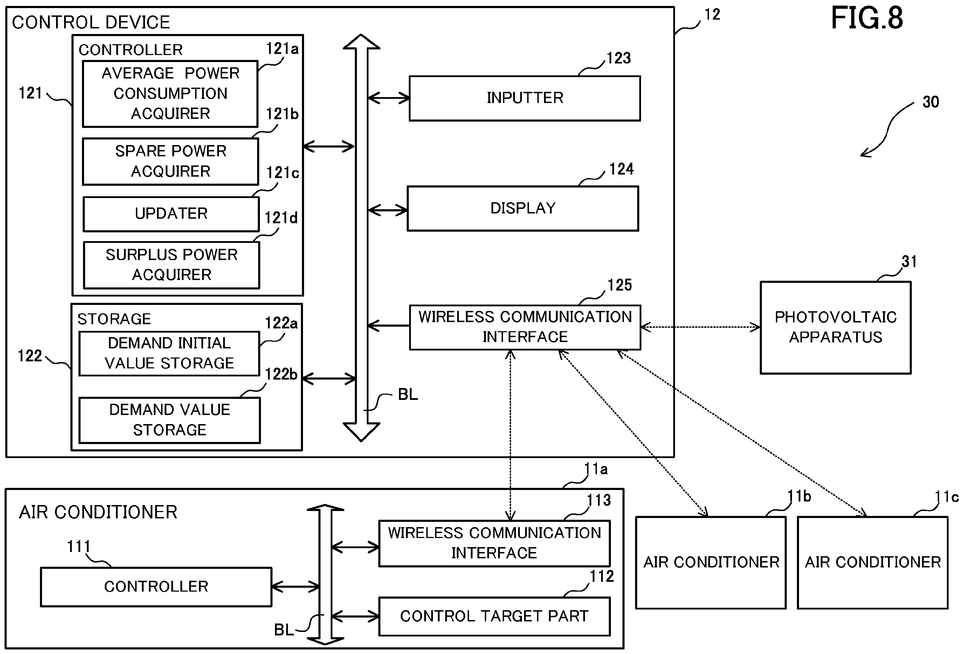

An air-conditioning system 30 of Embodiment 3 illustrated in FIGS. 8 to 10, when there is both spare power and surplus power, adds the spare power and surplus power to the demand initial value D, and then increases the demand value in the next set time period.

The air-conditioning system 30 of Embodiment 3 is described below with reference to FIGS. 8 to 10. The components described here that are the same as those in the air-conditioning system 10 of Embodiment 1 and the air-conditioning system 20 of Embodiment 2 are given the same reference numbers.

The air-conditioning system 30 that includes a control system set forth in Embodiment 3 of the present disclosure, as illustrated in FIG. 8, includes the air conditioners 11, the control device 12 and the photovoltaic apparatus 31.

The controller 111 of the air conditioner 11 starts counting with the timer upon reception, from the control device 12, of a signal indicating that demand control has started while the power source of the air conditioner 11 is turned on. When the controller 111 determines that a set time period (3 minutes for example) has elapsed based on counting with the timer, the controller 111 obtains a power consumption amount in the set time period. The controller 111 then transmits to the control device 12 the power consumption amount in the set time period.

Upon reception of the power consumption amount which is transmitted from the air conditioner 11, the controller 121 of the control device 12 stores the power consumption amount together with a piece of identification information into the RAM.

The photovoltaic apparatus 31 starts counting with the timer upon reception, from the control device 12, of a signal indicating that demand control has started while the power source of the air conditioner 11 is turned on. Upon determining that the set time period (3 minutes for example) has elapsed based on counting with the timer, the photovoltaic apparatus 31 obtains a generated power amount in the set time period. The photovoltaic apparatus 31 then transmits to the control device 12 the generated power amount in the set time period.

Upon reception of the generated power amount which is transmitted from the photovoltaic apparatus 31, the controller 121 of the control device 12 stores the generated power amount into the RAM.

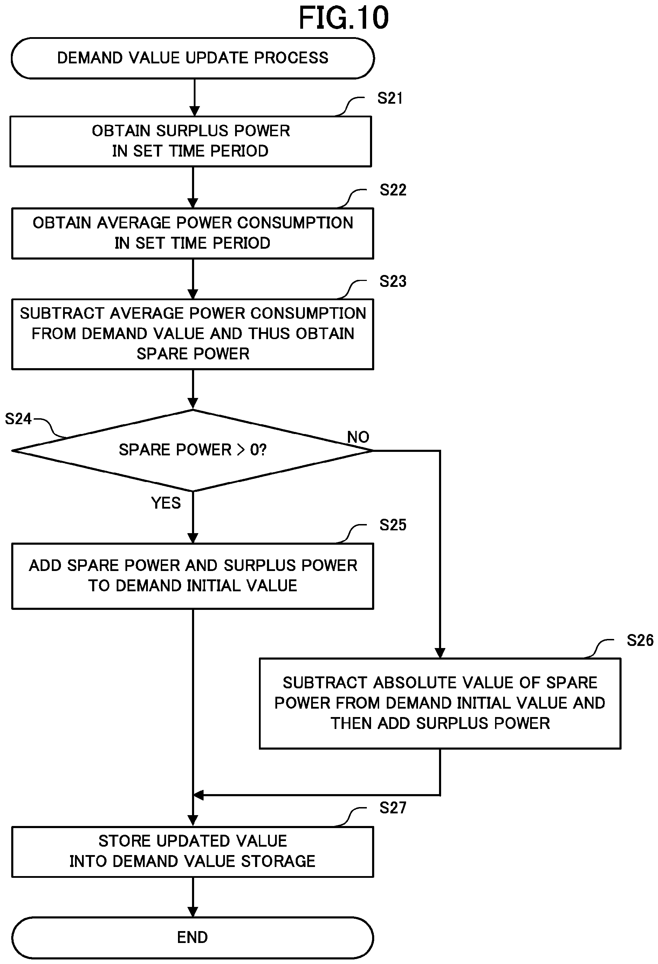

The CPU of the controller 121 executes a program (for example, a program that realizes the flowchart in FIG. 10 described later) stored in the ROM. Accordingly, the CPU of the controller 121 realizes: the average power consumption acquirer 121a that obtains an average power consumption of air conditioners 11a to 11c in the set time period; and the spare power acquirer 121b that obtains a spare power of the average power consumption obtained by the average power consumption acquirer 121a with respect to the demand value. The CPU of the controller 121 also realizes the updater 121c that updates the demand value and the surplus power acquirer 121d that obtains a surplus power based on a generated power of the photovoltaic apparatus 31 in the set time period.

The average power consumption acquirer 121a acquires from the RAM a power consumption amount which is transmitted from the air conditioners 11a to 11c for each piece of identification information (for each air conditioner 11). Also, the average power consumption acquirer 121a divides the acquired power consumption amount by the set time period and obtains the average power consumption of the air conditioner 11 in the set time period for each piece of identification information.

Each time the average power consumption is obtained by the average power consumption acquirer 121a (each time the set time period elapses), the spare power acquirer 121b subtracts the obtained average power consumption from the present demand value, and thus obtains the spare power for each piece of identification information.

The surplus power acquirer 121d acquires from the RAM a generated power amount which is transmitted from the photovoltaic apparatus 31, and divides the generated power amount by the set time period. The surplus power acquirer 121d then obtains the generated power of the photovoltaic apparatus 31 in the set time period.

The surplus power acquirer 121d then divides the obtained generated power by the number of units of the air conditioner 11 (distributes the surplus power values among each of the air conditioners 11), and thus obtains the surplus power. The surplus power acquirer 121d then multiplies the obtained surplus power by a predetermined coefficient, and thus obtains the surplus power in the set time period. The coefficient in this embodiment is 1.0.

When the spare power obtained by the spare power acquirer 121 b is a positive value, the updater 121c adds the obtained spare power and the surplus power (including zero) obtained by the surplus power acquirer 121d to the demand initial value D, and thus updates the demand value in the next set time period.

Conversely, when the spare power obtained by the spare power acquirer 121b is not a positive value (when zero or a negative value), the updater 121c updates the demand value in the next set time period to a power obtained by subtracting an absolute value (including zero) of the spare power from the demand initial value D, and then adding the surplus power (including zero) obtained by the surplus power acquirer 121d.

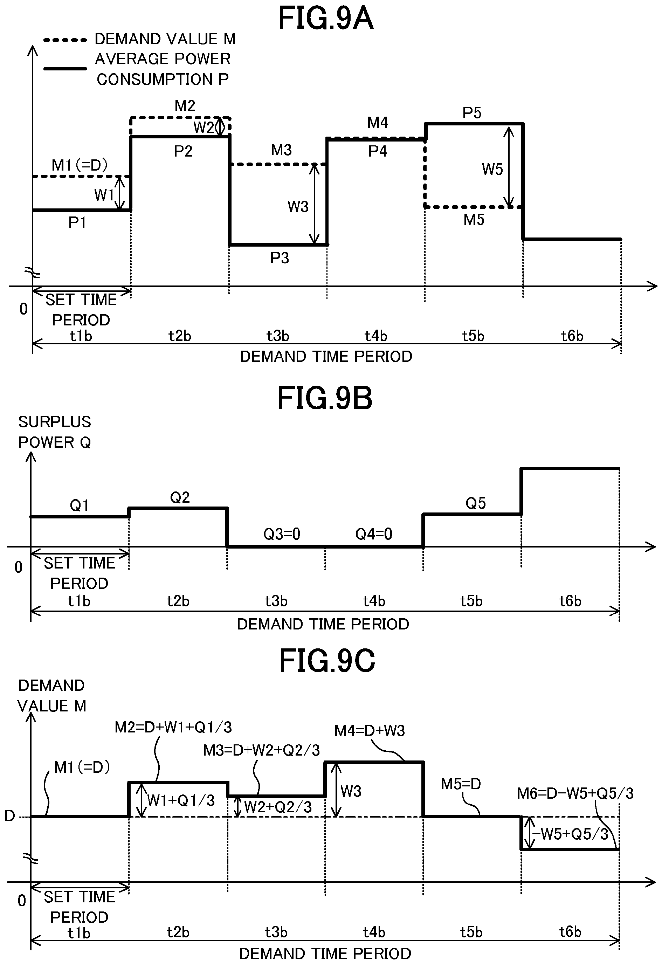

The updating of the demand value is described in detail with reference to FIGS. 9A, 9B, and 9C. In the description of FIGS. 9A, 9B, and 9C, the demand time period T is divided into six equal segments defined as set time periods t1b to t6b. The set time periods t1b to t6b each have the same length.

For example, as illustrated in FIG. 9A, the average power consumption acquirer 121a obtains, as P1, an average power consumption of the air conditioner 11a in the set time period t1b from the power consumption amount which is transmitted from the air conditioner 11a. Then, the spare power acquirer 121b subtracts the obtained average power consumption P1 from the demand value M1 (the demand value of the set time period t1b is the demand initial value D) that is together with the piece of identification information indicating the air conditioner 11a, and thus obtains a spare power W1 (positive value) of the air conditioner 11a.

Also, as illustrated in FIG. 9B, the surplus power acquirer 121d obtains, as Q1 (positive value), a generated power in the set time period t1b from the generated power amount which is transmitted from the photovoltaic apparatus 31. The surplus power acquirer 121d then divides the generated power Q1 by three, which is the number of units of the air conditioner 11, and thus obtains a surplus power Q1/3.

Then, the updater 121c adds the surplus power Q1/3 and the obtained spare power W1 to the demand initial value D of the air conditioner 11a, and thus updates the demand value M2 of the air conditioner 11a in the next set time period t2b following the set time period t1b to the demand initial value D + W1 + Q1/3, as illustrated in FIG 9C.

Also, for example, as illustrated in FIG. 9A, the average power consumption acquirer 121a obtains, as P2, an average power consumption of the air conditioner 11a in the set time period t2b from the power consumption amount which is transmitted from the air conditioner 11. Then, the spare power acquirer 121b subtracts the obtained average power consumption P2 from the demand value M2 that is together with the piece of identification information indicating the air conditioner 11a, and thus obtains a positive value of a spare power W2.

Also, as illustrated in FIG. 9B, the surplus power acquirer 121d obtains, as Q2 (positive value), a generated power in the set time period t2b from the generated power amount which is transmitted from the photovoltaic apparatus 31. The surplus power acquirer 121d then divides the generated power Q2 by three, which is the number of units of the air conditioner 11, and thus obtains a surplus power Q2/3.

Then, the updater 121c adds the surplus power Q2/3 and the obtained spare power W2 to the demand initial value D of the air conditioner 11a, and thus updates the demand value M3 of the air conditioner 11a in the next set time period t3b following the set time period t2b to the demand initial value D + W2 + Q2/3, as illustrated in FIG. 9C.

Also, for example, as illustrated in FIG. 9A, the average power consumption acquirer 121a obtains, as P3, an average power consumption of the air conditioner 11a in the set time period t3b from the power consumption amount which is transmitted from the air conditioner 11. Then, the spare power acquirer 121b subtracts the obtained average power consumption P3 from the demand value M3 that is together with the piece of identification information indicating the air conditioner 11a, and thus obtains a positive value of a spare power W3.

Also, as illustrated in FIG. 9B, the surplus power acquirer 121d obtains, as zero, a generated power Q3 in the set time period t3b from the generated power amount which is transmitted from the photovoltaic apparatus 31. As a result, the surplus power acquirer 121d obtains zero surplus power.

Then, the updater 121c adds the zero surplus power and the obtained spare power W3 to the demand initial value D of the air conditioner 11a, and thus updates the demand value M4 of the air conditioner 11a in the next set time period t4b following the set time period t3b to the demand initial value D + W3 as illustrated in FIG. 9C.

Also, for example, as illustrated in 9A, the average power consumption acquirer 121a obtains, as P4, an average power consumption of the air conditioner 11a in the set time period t4b from the power consumption amount which is transmitted from the air conditioner 11. Then, the spare power acquirer 121b subtracts the obtained average power consumption P4 from the demand value M4 that is together with the piece of identification information indicating the air conditioner 11a, and then obtains, as zero, a spare power.

Also, as illustrated in FIG. 9B, the surplus power acquirer 121d obtains, as zero, a generated power Q4 in the set time period t4b from the generated power amount which is transmitted from the photovoltaic apparatus 31. As a result, the surplus power acquirer 121d obtains zero surplus power.

Then, the updater 121c adds the zero surplus power and the zero spare power to the demand initial value D of the air conditioner 11a, and then updates the demand value M5 of the air conditioner 11a in the next set time period t5b following the set time period t4b to the demand initial value D as illustrated in FIG. 9C.

Also, for example, as illustrated in FIG. 9A, the average power consumption acquirer 121a obtains, as P5, an average power consumption of the air conditioner 11a in the set time period t5b from the power consumption amount which is transmitted from the air conditioner 11. Then, the spare power acquirer 121b subtracts the obtained average power consumption P5 from the demand value M5 that is together with the piece of identification information indicating the air conditioner 11a, and thus obtains a negative value of a spare power W5.

Also, as illustrated in FIG. 9B, the surplus power acquirer 121d obtains, as Q5 (positive value), a generated power in the set time period t2b from the generated power amount which is transmitted from the photovoltaic apparatus 31. The surplus power acquirer 121d then divides the generated power Q5 by three, which is the number of units of the air conditioner 11, and thus obtains a surplus power Q5/3.

Then, the updater 121c subtracts an absolute value of the spare power W5 from the demand initial value D of the air conditioner 11a, then, to that obtained value, adds the surplus power Q5/3, and then updates the demand value M6 of the air conditioner 11a in the next set time period t6b following the set time period t5b to the demand initial value D - W5 (absolute value) + Q5/3 as illustrated in FIG. 9C.

By performing this process also for the air conditioners 11b and 11c, the controller 121 updates the demand value during the demand time period. Upon updating of the demand value, the controller 121 obtains the rated power capacity ratio of the air conditioner 11 based on the updated demand value. The controller 121 then transmits (reports) to the air conditioner 11a control signal indicating the rated power capacity ratio.

Upon reception of the control signal, the controller 111 of the air conditioner 11 operates with the rated power capacity ratio instructed by the control signal, set as the target (standard).

In this way, the control device 12 controls the air conditioner 11 so that the average power consumption in the demand time period which is supplied to the air conditioner 11 from, for example, a commercial power source, and consumed, is less than or equal to the demand initial value D.

The controller 121 of the control device 12 obtains the rated power capacity ratio of the air conditioner 11 based on the demand initial value D stored in the demand value storage 122b when starting of demand control by the control device 12 is instructed from a user while the power sources of the above-described air conditioner 11 and control device 12 are turned on, and the photovoltaic apparatus 31 is in a power-generation-capable state. The controller 121 then transmits to the air conditioner 11a control signal indicating the rated power capacity ratio.

Upon reception of the control signal, each controller 111 of the air conditioners 11a to 11c operates with the rated power capacity ratio instructed by the control signal, set as the target. Each controller 111 of the air conditioners 11a to 11c then transmits the power consumption amount in the set time period to the control device 12 as the set time period elapses.

Also, the photovoltaic apparatus 31 transmits the power-generation amount in the set time period to the control device 12 as the set time period elapses.

Upon reception of the power consumption amount in the set time period from each of the air conditioners 11a to 11c and reception of the generated power amount in the set time period from the photovoltaic apparatus 31, the control device 12 executes a demand value update process illustrated in FIG. 10 in response to an interrupt signal indicating that the power consumption amount and the generated power amount were received. The demand value update process is a timer-interrupt process.

In the demand value update process, the controller 121 (the surplus power acquirer 121d) acquires from the RAM a generated power amount which is transmitted from the photovoltaic apparatus 31, divides the generated power amount by the set time period, and then obtains a generated power of the photovoltaic apparatus 31 in the set time period (step S21). The controller 121 (the surplus power acquirer 121d) then divides the generated power by 3, which is the number of units of the air conditioner 11, and then obtains a surplus power in the set time period (step S21).

Next, the controller 121 (the average power consumption acquirer 121a) obtains from the RAM a power consumption amount which is transmitted from the air conditioner 11, divides the power consumption amount by the set time period and obtains an average power consumption of the air conditioner 11 in the set time period for each piece of identification information (for each air conditioner) (step S22).

Next, the controller 121 (the spare power acquirer 121b) subtracts the average power consumption obtained in step S22 from the demand value stored in the demand value storage 122b, and thus obtains a spare power for each piece of identification information (step S23). When the demand value stored in the demand value storage 122b is not yet updated, the demand value is the demand initial value D.

The controller 121 (the updater 121c) then determines whether the spare power exceeds zero for each piece of identification information (step S24).

When the spare power exceeds zero, this is indication that there is a spare power. As such, the controller 121 (the updater 121c) determines Yes in step S24 for the piece of identification information that is together with the spare power that exceeds zero.

The controller 121 (the updater 121c) then adds the surplus power obtained in step S21 and the spare power obtained in step S23 to the demand initial value D stored in the demand initial value storage 122a, and thus updates the demand value in the next set time period (step S25).

Conversely, when the spare power does not exceed zero, that is to say, when the spare power is zero or a negative value, the controller 121 (the updater 121c) determines No in step S24 for the piece of identification information that is together with the spare power indicating zero or a negative value.

Next, the controller 121 (the updater 121c) subtracts an absolute value of the spare power (including zero) obtained in step S23 from the demand initial value D stored in the demand initial value storage 122a, adds to that obtained value the surplus power obtained in step S21, and then updates the demand value in the next time period (step S26).

After executing the process in step S25 or step S26, the controller 121 (the updater 121c) stores the updated demand value together with a piece of identification information into the demand value storage 122b (step S27) and thereby completes the demand value update process.

The controller 121 then obtains the rated power capacity ratio of the air conditioner 11 based on the demand value (the updated demand value) stored in the demand value storage 122b. Thereafter, the controller 121 transmits to the air conditioner 11 a control signal indicating the rated power capacity ratio.

Upon reception of the control signal, the controller 111 of the air conditioner 11 operates with the rated power capacity ratio instructed by the control signal, set as the target.

As described above, when a spare power is generated, the control device 12 adds the spare power and the surplus power to the demand initial value D, and then updates the demand value in the next time period. Also, when the spare power indicates zero or a negative value, the control device 12 updates the demand value in the next time period by subtracting an absolute value of the spare power from the demand initial value D, and then adding the surplus power.

As such, the control device 12 does not conduct control causing, for example, the power consumption of the air conditioner 11 to drastically decrease as the end of the specified time period draws closer resulting in insufficient leveling of the power consumption of the air conditioner 11. Thus, the air-conditioning system 30 of Embodiment 3 reduces inconvenience caused by fluctuation in operation capacity of the air conditioner 11 and contributes to reducing energy consumption.

While the embodiments of the present disclosure are described, this disclosure is not limited to such embodiments, and various modifications and applications are possible.

In the air-conditioning system 10 of Embodiment 1 and the air-conditioning system 30 of Embodiment 3 described above, although the average power consumption acquirer 121a of the control device 12 divides the power consumption amount acquired from the air conditioner 11 by the set time period, and obtains the average power consumption of the air conditioner 11 in the set time period, the present disclosure is not limited to this example.

The average power consumption acquirer 121a may multiply a predetermined coefficient k by the obtained average power consumption to obtain the average power consumption (= k × average power consumption) in the set time period for each piece of identification information. The coefficient may be a positive value.

In the air-conditioning system 10 of Embodiment 1 and the air-conditioning system 30 of Embodiment 3 described above, although the control device 12 divides the power consumption amount of the air conditioner 11 in the set time period by the set time period, and obtains the average power consumption of the air conditioner 11 in the set time period, the present disclosure is not limited to this example.

The control device 12, for example, may acquire a power consumption (an instantaneous value) at multiple times from the air conditioner 11 during the set time period, obtain an average value of the acquired power consumption, and thus obtain an average power consumption of the air conditioner 11 in the set time period.

Also, in the air-conditioning system 20 of Embodiment 2 and the air-conditioning system 30 of Embodiment 3 described above, although the control device 12 divides the generated power amount in the set time period by the set time period, and then obtains the generated power of the photovoltaic apparatus 31 in the set time period, the present disclosure is not limited to this example.

The control device 12, for example, may acquire a generated power (an instantaneous value) from the photovoltaic apparatus 31 at multiple times during the set time period, then obtain an average value of values of the acquired generated power, and thus obtain a generated power of the photovoltaic apparatus 31 in the set time period.

Also, the air-conditioning systems 10 to 30 in the above-described embodiments include multiple air conditioners 11 but the present disclosure is not limited to this example and may include one air conditioner 11.

Also, the air-conditioning systems 20 and 30 in the above-described embodiments include one photovoltaic apparatus 31 but the present disclosure is not limited to this, for example, a variation may be made to include multiple photovoltaic apparatuses 31.

Also, although the air-conditioning systems 10 to 30 in the above-described embodiments include the air conditioner 11, this is just an example, and the included electrical apparatus may be a lighting device and the like, instead of the air conditioner 11.

Also, although the air-conditioning systems 10 to 30 in the above-described embodiments include one control device 12 with respect to multiple air conditioners 11, the present disclosure is not limited to this example. The air conditioning systems 10 to 30 in the embodiments may include one control device 12 with respect to one air conditioner 11. That is to say, the air-conditioning systems 10 to 30 in the embodiments may include multiple control devices 12 with respect to multiple air conditioners 11.

Also, in the above-described air-conditioning system 10 in Embodiment 1 and the air-conditioning system 30 in Embodiment 3, the air conditioner 11 transmit to the control device 12 a wireless signal indicating a power consumption amount. Also, in the air-conditioning system 20 in Embodiment 2 and the air-conditioning system 30 in Embodiment 3, the photovoltaic apparatus 31 transmits to the control device 12 a wireless signal indicating a generated power amount. However, the present disclosure is not limited to these examples. The air conditioner 11 may transmit, by wired communication, to the control device 12 a pulse signal indicating the power consumption amount. Also, the photovoltaic apparatus 31 may transmit, by wired communication, to the control device 12, a pulse signal indicating the generated power amount.

Also, although the air-conditioning systems 10 to 30 in the above-described embodiments are described as having the demand time period of, 30 minutes, for example, and the set time period of, 3 minutes, for example, the present disclosure is not limited to these examples. The demand time period may be 60 minutes and the set time period may be 10 minutes, for example. Any demand time period and set time period may be selected as long as the set time period is shorter than the demand time period.

The air-conditioning systems 10 to 30 in the above-described embodiments may be applied to an air-conditioning system, and the like, installed within a building, for example. When one of the air-conditioning systems 10 to 30 is applied in a residence, a user may use, for example, a household appliance installed in a residence, instead of the air conditioner 11. Also, for example, the user may realize the control device 12 with a home energy management system (HEMS) controller.

Also, in the above-described air-conditioning system 20 of Embodiment 2 and the air-conditioning system 30 of Embodiment 3, although the control device 12 distributes the surplus power among all the air conditioners 11, adds the distributed surplus power to the demand initial value D that is together with each piece of identification information (each air conditioner 11), and updates the demand value of all the air conditioners 11, the present disclosure is not limited to this example. The control device 12 distributes the surplus power to the air conditioners 11 belonging to a predetermined group among the air conditioners 11. The control device 12 adds the distributed surplus power to the demand initial value D that is together with the air conditioners 11 belonging to the previously-described group. In this way, the control device 12 updates the demand value of the air conditioners 11 belonging to the predetermined group, and may maintain the demand value of the air conditioner 11 not belonging to the group at the demand initial value D. There may be one group or there may be multiple groups.

Also, in the above-described air-conditioning system 10 in Embodiment 1 and the air-conditioning system 20 in Embodiment 2, although the control device 12 individually (individually for each piece of identification information) updates the demand value of each air conditioner 11, the present disclosure is not limited to this example. For example, the control device 12 obtains the spare power of all of the air conditioners 11 (obtains the total spare power). The control device 12 also distributes the obtained total power to the air conditioners 11 belonging to the predetermined group among all of the air conditioners 11. The control device 12 also adds the distributed spare power to the demand initial value D that is together with the air conditioners 11 belonging to the previously described group. In this way, the control device 12 updates the demand value of the air conditioner 11 belonging to the predetermined group and may maintain the demand value of the air conditioner 11 not belonging to the group at the demand initial value D.

In the above-described embodiments, the program for controlling the controller 121 may be stored in and distributed with a non-transitory computer-readable recording medium such as a flexible disk, a compact disc read-only memory (CD-ROM), a digital versatile disc (DVD), a magneto-optical disc (MO) and/or the like, and the controller 121 that executes the process illustrated in FIGS. 4, 7, and 10 may be comprised by installing that program on a computer and/or the like.

Also, the above-described program may be stored on a disk device, and/or the like of a predetermined server device on a communication network such as the Internet and/or the like, and superimposed on carrier waves and downloaded and/or the like, for example.

In addition, when the process illustrated in the above-described FIGS. 4, 7, or 10 are realized by being partitioned by each operating system (OS), or are realized through cooperation between OS and applications, the parts other than the OS may be stored on the medium and distributed, and may be downloaded and/or the like.

The foregoing describes some example embodiments for explanatory purposes. Although the foregoing discussion has presented specific embodiments, persons skilled in the art will recognize that changes may be made in form and detail. Accordingly, the specification and drawings are to be regarded in an illustrative rather than a restrictive sense. This detailed description, therefore, is not to be taken in a limiting sense, and the scope of the invention is defined only by the included claims, along with the full range of equivalents to which such claims are entitled.

### Reference Signs List

- 10, 20, 30: Air-conditioning system
- 11: Air conditioner
- 12: Control device
- 31: Photovoltaic apparatus
- 111, 121: Controller
- 112: Control target part
- 113, 125: Wireless communication interface
- 122: Storage
- 123: Inputter
- 124: Display

## Claims

1. A control device (12) for controlling an electrical apparatus (11a, 11b, 11c) so that a power consumption of the electrical apparatus (11a, 11b, 11c) during a predetermined specified time period is less than or equal to a predetermined set power, the control device (12) comprising:
a spare power acquirer (121b) configured to, each time a set time period shorter than the specified time period elapses, obtain an average power consumption of the electrical apparatus (11a, 11b, 11c) in the set time period, and obtain a spare power of the average power consumption with respect to a target power in the set time period that is based on the set power; and **characterized by** an updater (121c) configured to:
update the target power in a next set time period based on a value of the spare power obtained by the spare power acquirer (121b),
and report the updated target power to a controller (111) that controls the electrical apparatus (11a, 11b, 11c), wherein the updater (121c) is configured to update the target power in the next set time period to a power obtained by adding the obtained spare power to the set power when the obtained spare power is a positive value, or update the target power in the next set time period to a power obtained by subtracting an absolute value of the obtained spare power from the set power when the obtained spare power is a negative value.

2. The control device (12) according to claim 1, wherein the spare power acquirer (121b) comprises:
an average power consumption acquirer (121a) configured to obtain the average power consumption of the electrical apparatus (11a, 11b, 11c) in the set time period as the set time period elapses; and
a subtraction acquirer configured to, upon obtaining the average power consumption by the average power consumption acquirer (121a), subtract the obtained average power consumption from the present target power and thus obtain the spare power.

3. The control device (12) according to claim 2, wherein the spare power acquirer (121b) is configured to obtain the average power consumption of the electrical apparatus (11a, 11b, 11c) in the set time period from a power consumption amount of the electrical apparatus (11a, 11b, 11c) measured in the set time period.

4. The control device (12) according to claim 1 or 2, wherein the electrical apparatus (11a, 11b, 11c) is one of a plurality of electrical apparatuses (11a, 11b, 11c) disposed in a plurality of locations, and the set power and the target power are provided for each of groups to which the plurality of electrical apparatuses (11a, 11b, 11c) belong, and
wherein the updater (121c) comprises:
a spare distributer configured to distribute, when the spare power obtained by the spare power acquirer (121b) is a positive value, the value of the obtained spare power to a predetermined determination group among the groups; and
a spare updater configured to add the spare power distributed by the spare power distributor per the determination group to the set power set in association with each determination group and thus update the target power of the determination group in the next set time period.

5. A control method of a control device (12) for controlling an electrical apparatus (11a, 11b, 11c) so that a power consumption of the electrical apparatus (11 a, 11b, 11c) during a predetermined specified time period is less than or equal to a predetermined set power, the control method comprising:
obtaining, each time a set time period shorter than the specified time period elapses, a spare power of an average power consumption of the electrical apparatus (11a, 11b, 11c) in the set time period with respect to a target power in the set time period that is based on the set power; and **characterized by** updating the target power in a next set time period based on a value of the obtained spare power, and reporting the updated target power to a controller (111) that controls the electrical apparatus (11a, 11b, 11c), the control method further comprising:
updating the target power in the next set time period to a power obtained by adding the obtained spare power to the set power when the obtained spare power is a positive value, or updating the target power in the next set time period to a power obtained by subtracting an absolute value of the obtained spare power from the set power when the obtained spare power is a negative value.

6. A program configured to cause a computer of a control device (12) for controlling an electrical apparatus (11a, 11b, 11c) so that a power consumption of the electrical apparatus (11a, 11b, 11c) during a predetermined specified time period is less than or equal to a predetermined set power, the program causing the computer to function as:
a spare power acquirer (121b) configured to, each time a set time period shorter than the specified time period elapses, obtain a spare power of an average power consumption of the electrical apparatus (11a, 11b, 11c) in the set time period with respect to a target power in the set time period based on the set power; and **characterized by** causing the computer to function as an updater (121c) configured to:
update the target power in a next set time period based on a value of the spare power obtained by the spare power acquirer (121b),
and report the updated target power to a controller (111) that controls the electrical apparatus (11a, 11b, 11c), wherein the updater (121c) is configured to update the target power in the next set time period to a power obtained by adding the obtained spare power to the set power when the obtained spare power is a positive value, or update the target power in the next set time period to a power obtained by subtracting an absolute value of the obtained spare power from the set power when the obtained spare power is a negative value.

## Patentansprüche

1. Steuerungseinrichtung (12) zum Steuern einer elektrischen Vorrichtung (11a, 11b, 11c), so dass ein Energieverbrauch der elektrischen Vorrichtung (11a, 11b, 11c) während eines vorherbestimmten spezifizierten Zeitabschnitts geringer ist als oder gleich ist wie eine vorherbestimmte eingestellte Leistung, wobei die Steuerungseinrichtung (12) umfasst:
einen Reserveleistungserwerber (121b), der eingerichtet ist, jedes Mal, wenn ein eingestellter Zeitabschnitt kürzer als der spezifizierte Zeitabschnitt abläuft, einen durchschnittlichen Energieverbrauch der elektrischen Vorrichtung (11a, 11b, 11c) in dem eingestellten Zeitabschnitt zu erhalten und eine Reserveleistung des durchschnittlichen Energieverbrauchs in Bezug auf eine Zielleistung im eingestellten Zeitabschnitt, die auf der eingestellten Leistung basiert, zu erhalten; und **gekennzeichnet durch**
einen Aktualisierer (121c), der eingerichtet ist, um:
die Zielleistung in einem nächsten eingestellten Zeitabschnitt zu aktualisieren auf der Grundlage von einem Wert der durch den Reserveleistungserwerber (121) erworbenen Reserveleistung,
und die aktualisierte Zielleistung an eine Steuereinheit (111), die die elektrische Vorrichtung (11a, 11b, 11c) steuert, zu melden, wobei der Aktualisierer (121c) eingerichtet ist, die Zielleistung im nächsten eingestellten Zeitabschnitt auf eine Leistung zu aktualisieren, die erhalten wird durch Hinzufügen der erhaltenen Reserveleistung zur eingestellten Leistung, wenn die erhaltene Reserveleistung ein positiver Wert ist, oder die Zielleistung im nächsten eingestellten Zeitabschnitt auf eine Leistung zu aktualisieren, die erhalten wird durch Subtrahieren eines Absolutwertes der erhaltenen Reserveleistung von der eingestellten Leistung, wenn die erhaltene Reserveleistung ein negativer Wert ist.

2. Steuerungseinrichtung (12) nach Anspruch 1, wobei der Reserveleistungserwerber (121b) umfasst:
einen Durchnittlicher-Energieverbrauch-Erwerber (121a), der eingerichtet ist, den durchschnittlichen Energieverbrauch der elektrischen Vorrichtung (11a, 11b, 11c) im eingestellten Zeitabschnitt mit Ablauf des eingestellten Zeitabschnitts zu erhalten; und
einen Subtraktionserwerber, der eingerichtet ist, um, auf Erhalten des durchschnittlichen Energieverbrauchs durch den Durchschnittlicher-Energieverbrauch-Erwerber (121a), den erhaltenen durchschnittlichen Energieverbrauch von der aktuellen Zielleistung zu subtrahieren und somit die Reserveleistung zu erhalten.

3. Steuerungseinrichtung (12) nach Anspruch 2, wobei der Reserveleistungserwerber (121b) eingerichtet ist, den durchschnittlichen Energieverbrauch der elektrischen Vorrichtung (11a, 11b, 11c) im eingestellten Zeitabschnitt aus einer Energieverbrauchsmenge der elektrischen Vorrichtung (11a, 11b, 11c), gemessen im eingestellten Zeitabschnitt, zu erhalten.

4. Steuerungseinrichtung (12) nach Anspruch 1 oder 2, wobei die elektrische Vorrichtung (11a, 11b, 11c) eine von einer Vielzahl von elektrischen Vorrichtungen (11a, 11b, 11c) ist, die an einer Vielzahl von Standorten angeordnet ist, und die eingestellte Leistung und die Zielleistung für jede der Gruppen, zu denen die Vielzahl der elektrischen Vorrichtungen (11a, 11b, 11c) gehören, vorgesehen sind, und
wobei der Aktualisierer (121c) umfasst:
einen Reserveleistungsverteiler, der eingerichtet ist, um, wenn die durch den Reserveleistungserwerber (121b) erhaltene Reserveleistung ein positiver Wert ist, den Wert der erhaltenen Reserveleistung auf eine vorherbestimmte Bestimmungsgruppe unter den Gruppen zu verteilen; und
einen Reserveaktualisierer, der eingerichtet ist, die durch den Reserveleistungsverteiler auf die Bestimmungsgruppe verteilte Reserveleistung zur eingestellten Leistung, eingestellt in Verbindung mit jeder Bestimmungsgruppe, hinzuzufügen und somit die Zielleistung der Bestimmungsgruppe im nächsten eingestellten Zeitabschnitt zu aktualisieren.

5. Steuerungsverfahren einer Steuerungseinrichtung (12) zum Steuern einer elektrischen Vorrichtung (11a, 11b, 11c), so dass ein Energieverbrauch der elektrischen Vorrichtung (11a, 11b, 11c) während eines vorherbestimmten spezifizierten Zeitabschnitts geringer ist als oder gleich ist wie eine vorherbestimmte eingestellte Leistung, wobei das Steuerungsverfahren umfasst:
Erhalten, jedes Mal, wenn ein eingestellter Zeitabschnitt kürzer als der spezifizierte Zeitabschnitt abläuft, einer Reserveleistung eines durchschnittlichen Energieverbrauchs der elektrischen Vorrichtung (11a, 11b, 11c) im eingestellten Zeitabschnitt in Bezug auf eine Zielleistung im eingestellten Zeitabschnitt, die auf der eingestellten Leistung basiert; und **gekennzeichnet durch**
Aktualisieren der Zielleistung in einem nächsten eingestellten Zeitabschnitt auf der Grundlage von einem Wert der erhalten Reserveleistung, und Melden der aktualisierten Zielleistung an eine Steuereinheit (111), die die elektrische Vorrichtung (11a, 11b, 11c) steuert, wobei das Steuerungserfahren ferner umfasst:
Aktualisieren der Zielleistung im nächsten eingestellten Zeitabschnitt auf eine Leistung, die erhalten wird durch Hinzufügen der erhaltenen Reserveleistung zur eingestellten Leistung, wenn die erhaltene Reserveleistung ein positiver Wert ist, oder Aktualisieren der Zielleistung im nächsten eingestellten Zeitabschnitt auf eine Leistung, die erhalten wird durch Subtrahieren eines Absolutwertes der erhaltenen Reserveleistung von der eingestellten Leistung, wenn die erhaltene Reserveleistung ein negativer Wert ist.

6. Programm, das eingerichtet ist, einen Computer einer Steuerungseinrichtung (12) zum Steuern einer elektrischen Vorrichtung (11a, 11b, 11c) zu veranlassen, so dass ein Energieverbrauch der elektrischen Vorrichtung (11a, 11b, 11c) während eines vorherbestimmten spezifizierten Zeitabschnitts kleiner ist als oder gleich ist wie eine vorherbestimmte eingestellte Leistung, wobei das Programm den Computer veranlasst, zu funktionieren als:
ein Reserveleistungserwerber (121b), der eingerichtet ist, jedes Mal, wenn ein eingestellter Zeitabschnitt kürzer als der spezifizierte Zeitabschnitt abläuft, eine Reserveleistung eines durchschnittlichen Energieverbrauch der elektrischen Vorrichtung (11a, 11b, 11c) im eingestellten Zeitabschnitt in Bezug auf eine Zielleistung imeingestellten Zeitabschnitt, basierend auf der eingestellten Leistung, zu erhalten; und **gekennzeichnet durch** Veranlassen den Computers, zu funktionieren als:
ein Aktualisierer (121c), der eingerichtet ist, um:
die Zielleistung in einem nächsten eingestellten Zeitabschnitt zu aktualisieren auf der Grundlage von einem Wert der durch den Reserveleistungserwerber (121) erworbenen Reserveleistung,
und die aktualisierte Zielleistung an eine Steuereinheit (111), die die elektrische Vorrichtung (11a, 11b, 11c) steuert, zu melden, wobei der Aktualisierer (121c) eingerichtet ist, die Zielleistung im nächsten eingestellten Zeitabschnitt auf eine Leistung zu aktualisieren, die erhalten wird durch Hinzufügen der erhaltenen Reserveleistung zur eingestellten Leistung, wenn die erhaltene Reserveleistung ein positiver Wert ist, oder die Zielleistung im nächsten eingestellten Zeitabschnitt auf eine Leistung zu aktualisieren, die erhalten wird durch Subtrahieren eines Absolutwertes der erhaltenen Reserveleistung von der eingestellten Leistung, wenn die erhaltene Reserveleistung ein negativer Wert ist.

## Revendications

1. Dispositif de commande (12) destiné à commander un appareil électrique (11a, 11b, 11c) de sorte qu'une consommation de puissance de l'appareil électrique (11a, 11b, 11c) au cours d'une période de temps spécifiée prédéterminée est inférieure ou égale à une puissance définie prédéterminée, le dispositif de commande (12) comprenant :
un module d'acquisition de puissance de réserve (121b) configuré de manière à, à chaque fois qu'une période de temps définie plus courte que la période de temps spécifiée s'écoule, obtenir une consommation de puissance moyenne de l'appareil électrique (11a, 11b, 11c) dans la période de temps définie, et obtenir une puissance de réserve de la consommation de puissance moyenne par rapport à une puissance cible dans la période de temps définie qui est basée sur la puissance définie ; et **caractérisé par** :
un module de mise à jour (121c) configuré de manière à :
mettre à jour la puissance cible dans une période de temps définie successive sur la base d'une valeur de la puissance de réserve obtenue par le module d'acquisition de puissance de réserve (121b) ; et
signaler la puissance cible mise à jour à un contrôleur (111) qui commande l'appareil électrique (11a, 11b, 11c), dans lequel le module de mise à jour (121c) est configuré de manière à mettre à jour la puissance cible dans la période de temps définie successive à une puissance obtenue en ajoutant la puissance de réserve obtenue à la puissance définie lorsque la puissance de réserve obtenue est une valeur positive, ou à mettre à jour la puissance cible dans la période de temps définie successive à une puissance obtenue en soustrayant une valeur absolue de la puissance de réserve obtenue, de la puissance définie, lorsque la puissance de réserve obtenue est une valeur négative.

2. Dispositif de commande (12) selon la revendication 1, dans lequel le module d'acquisition de puissance de réserve (121b) comprend :
un module d'acquisition de consommation de puissance moyenne (121a) configuré de manière à obtenir la consommation de puissance moyenne de l'appareil électrique (11a, 11b, 11c) dans la période de temps définie à mesure que la période de temps définie s'écoule ; et
un module d'acquisition de soustraction configuré de manière à, lors de l'obtention de la consommation de puissance moyenne par le module d'acquisition de consommation de puissance moyenne (121a), soustraire la consommation de puissance moyenne obtenue de la puissance cible actuelle, et obtenir par conséquent la puissance de réserve.

3. Dispositif de commande (12) selon la revendication 2, dans lequel le module d'acquisition de puissance de réserve (121b) est configuré de manière à obtenir la consommation de puissance moyenne de l'appareil électrique (11a, 11b, 11c) dans la période de temps définie, à partir d'une quantité de consommation de puissance de l'appareil électrique (11a, 11b, 11c) mesurée dans la période de temps définie.

4. Dispositif de commande (12) selon la revendication 1 ou 2, dans lequel l'appareil électrique (11a, 11b, 11c) correspond à un appareil parmi une pluralité d'appareils électriques (11a, 11b, 11c) disposés dans une pluralité d'emplacements, et la puissance définie et la puissance cible sont fournies pour chaque groupe parmi des groupes auxquels appartiennent les appareils de la pluralité d'appareils électriques (11a, 11b, 11c) ; et
dans lequel le module de mise à jour (121c) comprend :
un module de distribution de puissance de réserve configuré de manière à distribuer, lorsque la puissance de réserve obtenue par le module d'acquisition de puissance de réserve (121b) est une valeur positive, la valeur de la puissance de réserve obtenue, à un groupe de détermination prédéterminé parmi les groupes ; et
un module de mise à jour de réserve configuré de manière à ajouter la puissance de réserve distribuée par le module de distribution de puissance de réserve selon le groupe de détermination, à la puissance définie qui est définie en association avec chaque groupe de détermination, et à mettre à jour par conséquent la puissance cible du groupe de détermination dans la période de temps définie successive.

5. Procédé de commande d'un dispositif de commande (12) pour commander un appareil électrique (11a, 11b, 11c) de sorte qu'une consommation de puissance de l'appareil électrique (11a, 11b, 11c) au cours d'une période de temps spécifiée prédéterminée est inférieure ou égale à une puissance définie prédéterminée, le procédé de commande comprenant l'étape ci-dessous consistant à :
obtenir, à chaque fois qu'une période de temps définie plus courte que la période de temps spécifiée s'écoule, une puissance de réserve d'une consommation de puissance moyenne de l'appareil électrique (11a, 11b, 11c) dans la période de temps définie par rapport à une puissance cible dans la période de temps définie qui est basée sur la puissance définie ; et **caractérisé par** les étapes ci-dessous consistant à :
mettre à jour la puissance cible dans une période de temps définie successive sur la base d'une valeur de la puissance de réserve obtenue, et signaler la puissance cible mise à jour à un contrôleur (111) qui commande l'appareil électrique (11a, 11b, 11c), dans lequel le procédé de commande comprend en outre les étapes ci-dessous consistant à :
mettre à jour la puissance cible dans la période de temps définie successive à une puissance obtenue en ajoutant la puissance de réserve obtenue à la puissance définie lorsque la puissance de réserve obtenue est une valeur positive, ou mettre à jour la puissance cible dans la période de temps définie successive à une puissance obtenue en soustrayant une valeur absolue de la puissance de réserve obtenue, de la puissance définie, lorsque la puissance de réserve obtenue est une valeur négative.

6. Programme configuré de manière à amener un ordinateur d'un dispositif de commande (12) à commander un appareil électrique (11a, 11b, 11c) de sorte qu'une consommation de puissance de l'appareil électrique (11a, 11b, 11c) au cours d'une période de temps spécifiée prédéterminée est inférieure ou égale à une puissance définie prédéterminée, le programme amenant l'ordinateur à fonctionner comme :
un module d'acquisition de puissance de réserve (121b) configuré de manière à, à chaque fois qu'une période de temps définie plus courte que la période de temps spécifiée s'écoule, obtenir une puissance de réserve d'une consommation de puissance moyenne de l'appareil électrique (11a, 11b, 11c) dans la période de temps définie, par rapport à une puissance cible dans la période de temps définie basée sur la puissance définie ; et **caractérisé en ce qu'**il amène l'ordinateur en fonctionner comme :
un module de mise à jour (121c) configuré de manière à :
mettre à jour la puissance cible dans une période de temps définie successive sur la base d'une valeur de la puissance de réserve obtenue par le module d'acquisition de puissance de réserve (121b) ; et
signaler la puissance cible mise à jour à un contrôleur (111) qui commande l'appareil électrique (11a, 11b, 11c), dans lequel le module de mise à jour (121c) est configuré de manière à mettre à jour la puissance cible dans la période de temps définie successive à une puissance obtenue en ajoutant la puissance de réserve obtenue à la puissance définie lorsque la puissance de réserve obtenue est une valeur positive, ou à mettre à jour la puissance cible dans la période de temps définie successive à une puissance obtenue en soustrayant une valeur absolue de la puissance de réserve obtenue, de la puissance définie, lorsque la puissance de réserve obtenue est une valeur négative.
